# EUROPÄISCHE PATENTANMELDUNG

(11) **EP 0 816 642 A2**
(43) Veröffentlichungstag der Anmeldung: **07.01.1998**
(21) Anmeldenummer: 97108074.2
(22) Anmeldetag: 17.05.1997
(51) Int. Cl.: F01K 23/10

(54) **Kombinierte Gas-Dampf-Kraftanlage und Prozess**

(30) Priorität: 28.06.1996 DE 19626011
(71) Anmelder: Babcock Lentjes Kraftwerkstechnik GmbH, 46049 Oberhausen (DE)
(72) Erfinder: Pabsch, Tim, 31547 Rehburg-Loccum (DE)
(74) Vertreter: Müller, Jürgen, Dipl.-Ing.

(57) **Zusammenfassung**

In einer kombinierten Gas-Dampf-Kraftanlage mit einer Gasturbine (4) und einem befeuerten Dampferzeuger (7), sind die Brenner des Dampferzeugers (7) mit dem Abgas der Gasturbine (4) und mit durch einen Frischlüfters (26) geförderten und in einem regenerativen Luftvorwärmer (22) vorgewärmten Luft beaufschlagt. Das Abgas und die vorgewärmte Luft werden in einer Mischeinrichtung (31) vor dem Eintritt in den jeweiligen Brenner gemischt. Eine Entstickungsanlage (21) ist dem regenerativen Luftvorwärmer (22) in Strömungsrichtung des Rauchgases vorgeschaltet. Von der den regenerativen Luftvorwärmer (22) mit den Brennern verbindenden und ein Regelorgan (33) aufnehmenden Warmluftleitung (28) ist eine Leitung (34) abgezweigt und zu der Saugseite des Frischlüfters (26) zurückgeführt. In dieser Leitung (34) ist ein Kondensatvorwärmer (35) angeordnet, der vorzugsweise in den Wasser-Dampf-Kreislauf des Dampferzeugers (7) eingebunden ist. Über die abgezweigte Leitung wird ein geregelter Teilstrom der vorgewärmten Luft entnommen, zur Wärmeabgabe durch den Kondensatvorwärmer (35) geführt und anschließend der zu erwärmenden Luft wieder beigegeben.

## Beschreibung

Die Erfindung betrifft eine kombinierte Gas-Dampf-Kraftanlage und einen kombinierten Gas-Dampf-Prozeß mit den Merkmalen des Oberbegriffes des Anspruches 1 und 8.

Eine derartige Anlage mit einem mit Kohle befeuerten Dampferzeuger ist in der deutschen Veröffentlichung VGB Kraftwerkstechnik 69 (1989), Seiten 483 - 490 beschrieben. Um bei dieser Anlage die Anforderungen an niedrige Gehalte an Stickoxid im Rauchgas einzuhalten, ist eine Entstickungsanlage vorzusehen. Da die Rauchgastemperatur vor der letzten Nachschaltheizfläche des Dampferzeugers niedrig liegt, kann die Entstickung mit Ammoniak nicht am ungereinigten Rauchgas (High-Dust Anlage) vorgenommen werden, weil sich bei diesen Temperaturen Ammoniumsalzablagerungen auf den Nachschaltheizflächen bilden. Diese Ablagerungen führen zu Verschmutzungen, die sich von den Nachschaltheizflächen nur schwer entfernen lassen. Es wurde daher als notwendig erachtet, eine Low-Dust-Entstickungsanlage vorzusehen, bei der das Rauchgas vor der Behandlung mit Ammoniak gereinigt und entschwefelt wird. Diese Verfahrensweise macht es notwendig, das Rauchgas vor der Entstickung mit Hilfe von Fremdwärme z. B. Anzapfdampf wieder aufzuheizen, was mit einer Verminderung des Blockwirkungsgrades verbunden ist.

Um die bei der Entstickung der Rauchgase in einer kombinierten Gas-Dampf-Kraftanlage auftretenden Probleme mit der Verbrennung und der Heizflächenverschmutzung zu beherrschen, wurde das "Verbundkraftwerk" entwickelt (Energie 43 (1991) Nr. 9. Seiten 26 - 32). Bei diesem Verbundkraftwerk wird der mit Erdgas gefeuerten Gasturbine ein ungefeuerter Abhitzedampferzeuger nachgeschaltet. Dieser Abhitzedampferzeuger ist wasser-/dampfseitig mit einem mit Kohle gefeuerten Dampferzeuger verbunden. Dem Dampferzeuger ist rauchgasseitig eine High-Dust-Entstickungsanlage und dieser ein regenrativer Luftvorwärmer nachgeschaltet. Dieses Verbundkraftwerk vermeidet zwar die Verschmutzung der Heizflächen, erfordert aber zwei Aggregate zur Dampferzeugung.

Der Erfindung liegt die Aufgabe zugrunde, den befeuerten Dampferzeuger so in die gattungsgemäße kombinierte Gas-Dampf-Kraftanlage bzw. in den Prozeß einzubinden, daß eine Entstickung des Rauchgases ohne die Gefahr einer Heizflächenverschmutzung und ohne den Einbau zusätzlicher vom Rauchgas beheizter Heizflächen möglich ist.

Diese Aufgabe wird bei einer gattungsgemäßen kombinierten Gas-Dampf-Kraftanlage erfindungsgemäß durch die Merkmale des Anspruches 1 gelöst. Ein Verfahren ist in dem Anspruch 8 angegeben. Vorteilhafte Ausgestaltungen sind Gegenstand der Unteransprüche.

Bei der erfindungsgemäßen Gas-Dampf-Kraftanlage bzw. bei dem Prozeß wird ein Teil der in dem Luftvorwärmer von dem Rauchgas abgegebenen Wärme ausgekoppelt und über die vorgewärmte überschüssige Luft auf das dem Dampferzeuger zugeführte Kondensat oder auf einen anderen Wärmeträger übertragen. Auf diese Weise gelingt es, die Entstickungsanlage in dem ungereinigten Rauchgas als High-Dust-Anlage unterzubringen und die restliche Rauchgaswärme über ein nicht mit Staub beladenes Medium abzuführen. Dabei wird die Wärme ohne die Gefahr einer Heizflächenverschmutzung für den Dampferzeugungsprozeß nutzbar gemacht.

Ein Anteil der vorgewärmten Luft wird zusammen mit dem heißen Turbinenabgas den Brennern des Dampferzeugers zugeführt. Dadurch läßt sich einerseits die Abwärme der Gasturbine in dem befeuerten Dampferzeuger abführen, so daß zusätzliche, rauchgasbeheizte Heizflächen nicht benötigt werden.

Andererseits werden durch die gemeinsame Zuführung des Turbinenabgases und der Luft der notwendige Luftüberschuß und optimale Strömungsgeschwindigkeiten und -verhältnisse in den Brennern eingehalten. Ein bereits vorhandener befeuerter Dampferzeuger, der für sich alleine zu betreiben ist, kann auf diese Weise, ohne daß er umgerüstet werden muß, mit einer Gasturbine kombiniert werden. Durch die hohen Temperaturen des Verbrennungsmediums zündet ein schwer zündender Brennstoff schneller. Die verminderten Sauerstoffgehalte im Verbrennungsmedium verringern die Bildung von Stickoxiden bei der Verbrennung.

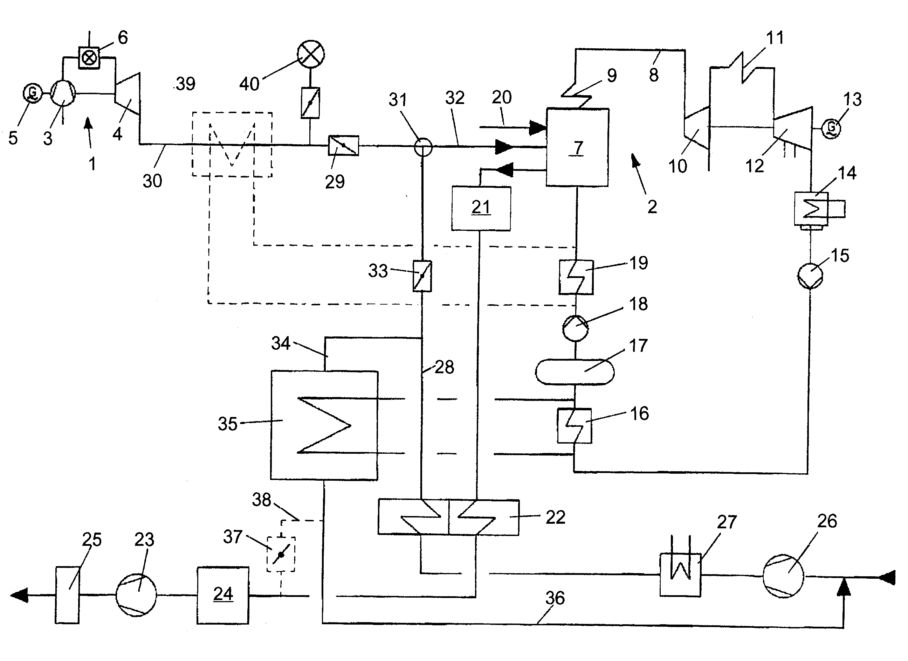

Ein Ausführungsbeispiel der Erfindung ist in der Zeichnung dargestellt und wird im folgenden näher erläutert. Die Zeichnung stellt das Fließbild einer kombinierten Gas-Dampf-Kraftanlage dar.

Die kombinierte Gas-Dampf-Kraftanlage besteht aus einer Gasturbineneinheit 1 und einer Dampferzeugereinheit 2. Die Gasturbineneinheit 1 besteht aus einem Verdichter 3, einer Gasturbine 4 und einem Generator 5, die auf einer gemeinsamen Welle angeordnet sind, sowie aus einer mit Erdgas befeuerten Brennkammer 6.

Die Dampferzeugereinheit 2 besteht aus einem Dampferzeuger 7 mit einem Kesselteil, der mit als Economiser und als Verdampfer geschalteten Heizflächen versehen ist. Über eine Dampfleitung 8 ist der Verdampfer mit einem Überhitzer 9 und einer Hochdruckdampfturbine 10 verbunden. Der Hochdruckdampfturbine 10 ist über einen Zwischenüberhitzer 11 eine Mitteldruck/Niederdruck-Dampfturbine 12 nachgeschaltet, die zusammen mit der Hochdruckdampfturbine 10 einen Generator 13 antreibt. Der Abdampf der Mitteldruck/Niederdruck-Dampfturbine 12 in einem Kondensator 14 kondensiert und über eine Kondensatpumpe 15 einem mit Anzapfdampf aus der Mitteldruck/Niederdruck-Dampfturbine 12 beheizten Niederdruckvorwärmer 16 und von dort einen Speisewasserbehälter 17 zugeführt. Aus dem Speisewasserbehälter 17 gelangt das Kondensat, gefördert durch eine Speisewasserpumpe 18, als Speisewasser in einen mit Anzapfdampf aus der Mitteldruck/Niederdruck-Dampfturbine 12 beheizten Hochdruckvorwärmer 19 und anschließend zurück in den Dampferzeuger 7.

Der Dampferzeuger 7, der in bekannter Weise mit nicht näher gezeigten Brennern versehen ist, wird mit festen, flüssigen oder gasförmigen Brennstoffen, insbesondere Steinkohle oder mit Schweröl befeuert. Der Brennstoff wird den Brennern über eine Brennstoffleitung 20 zugeführt.

Das durch die Verbrennung des Brennstoffes entstandene Rauchgas wird nach dem Austritt aus den Kesselteil des Dampferzeugers 7 einer Entstickungsanlage 21 zugeführt, die, da sie von dem noch Staub mit sich führenden Rauchgas beaufschlagt ist, als High-Dust-Anlage ausgebildet ist. In der Entstickungsanlage 21 wird dem Rauchgas Ammoniak oder ammoniumhaltige Medien zugegeben, die sich mit oder ohne Hilfe eines Katalysators mit den in dem Rauchgas enthaltenen Stickoxiden umsetzen und diese zu Stickstoff reduzieren.

Das in der Entstickungsanlage 21 behandelte Rauchgas gelangt anschließend in einen regenerativen Luftvorwärmer 22. Dieser Luftvorwärmer 22 kann als rotierender Luftvorwärmer ausgebildet oder auch mit feststehenden Wärmetauscherteilen versehen sein. Das in dem Luftvorwärmer 22 abgekühlte Rauchgas wird über ein Saugzugebläse 23 einem Filter, z. B. einem Elektrofilter 24 und danach einer Entschwefelungsanlage 25 zugeführt. Anschließend wird das Rauchgas durch einen nicht gezeigten Kamin oder Kuhlturm ins Freie abgeführt.

Die für die Verbrennung des Brennstoffs notwendige Luft wird mit Hilfe eines Frischlüfters 26 angesaugt, über einen mit Anzapfdampf oder Warmwasser beheizten Luftvorwärmer 27 dem regenerativen Luftvorwärmer 22 zugeführt, in dem die Luft im Wärmetausch mit dem Rauchgas vorgewärmt wird. Diese vorgewärmte Luft wird über eine an die heiße Seite des regenerativen Luftvorwärmers 22 angeschlossene Warmluftleitung 28 den Brennern zugeführt.

An den Gasaustritt der Gasturbine 4 ist eine eine Regelklappe 29 aufnehmende Abgasleitung 30 angeschlossen, die in die Warmluftleitung 28 einmündet. An der Einmündung der Abgasleitung 30 in die Warmluftleitung 28 ist eine Mischeinrichtung 31 angeordnet, in der das Abgas und die vorgewärmte Luft miteinander vermischt werden. Von der Mischeinrichtung 31 ist eine Brennerleitung 32 zu dem jeweiligen Brenner geführt, über die der betreffende Brenner mit einem als Verbrennungsmedium dienenden Abgas-Luft-Gemisch versorgt wird.

In der Warmluftleitung 28 ist ein Regelorgan 33 angeordnet. Zwischen dem Regelorgan 33 und dem regenerativen Luftvorwärmer 22 ist von der Warmluftleitung 28 eine Leitung 34 abgezweigt. Diese abgezweigte Leitung 34 ist zu einem Kondensatvorwärmer 35 geführt, der über eine Rückführleitung 36 mit der Saugseite des Frischlüfters 26 verbunden ist. Gesteuert durch das Regelorgan 33 in der Warmluftleitung 28 wird der gesamte Strom bzw. ein Teilstrom der in dem regenerativen Luftvorwärmer 22 vorgewärmten Luft zur Wärmeabgabe durch dem Kondensatvorwärmer 35 geführt und anschließend dem Luftkreislauf wieder zugegeben. Der Kondensatvorwärmer 35 ist in vorteilhafter Weise in den Wasser/Dampf-Kreislauf des Dampferzeugers 7 eingebunden und zu diesem Zweck parallel zu dem Niederdruckvorwärmer 16 geschaltet. Auf diese Weise wird ein Teil der in dem regenerativen Luftvorwärmer 22 von dem Rauchgas abgegebenen Wärme dem Dampferzeuger 7 wieder zugeführt, wobei dieser Teil der Wärme nicht durch Anzapfdampf aufgebracht werden muß. Anstelle von Kondensat, das in den Dampferzeuger 7 eingespeist wird, kann der Kondensatvorwärmer 35 auch von einem anderen Wärmeträger durchströmt werden, dessen Wärme z. B. in einem Fernwärmesystem oder für einen anderen Zweck nutzbar gemacht werden kann.

Insbesondere dann, wenn eine größere Menge an vorgewärmter Luft im Kreislauf durch den Kondensatvorwärmer 35 und den regenerativen Luftvorwärmer 22 geführt und keine oder nur eine geringe Luftmenge den Brennern zugeführt wird, besteht bei der Verwendung eines rotierenden Luftvorwärmers die Gefahr, daß aufgrund von unvermeidbaren Leckageverlusten staubbeladenes Rauchgas in den Luftstrom gelangt und sich in der vorgewärmten Luft anreichert. Um diese Anreicherung zu vermeiden, ist eine durch ein Absperrorgan 37 absperrbare Zweigleitung 38 von der Rückführleitung 36 zu dem Elektrofilter 24 geführt. Über diese Zweigleitung 38 kann eine Teilmenge der verunreinigten Luft mit dem den regenerativen Luftvorwärmer 22 verlassenden Rauchgas abgeführt werden.

In der Abgasleitung 30 ist ein Zwischenenthitzer 39 angeordnet, über den ein Teil der Wärme des Abgases vor der Vermischung mit der vorgewärmten Luft abgeführt werden kann. Gemäß der Zeichnung ist dieser Zwischenenthitzer 39 parallel zu dem mit Anzapfdampf beheizten Hochdruckvorwärmer 19 geschaltet, so daß die Abgaswärme dem Wasser/Dampf-Kreislauf des Dampferzeugers 7 zugute kommt, und eine entsprechende Menge an Anzapfdampf für die Speisewasservorwärmung eingespart werden kann. Der Zwischenenthitzer 39 kann auch für einen anderen Zweck, z. B. zur Erzeugung von Hilfsdampf eingesetzt werden, der in der Gas-Dampf-Kraftanlage oder auch zur Fernwärmeerzeugung benötigt wird.

Von der Abgasleitung 30 ist eine absperrbare Leitung einen Abgaskamin 40 geführt.

Der beschriebene kombinierte Gas-Dampf-Prozeß wird in der Weise betrieben, daß über den Frischlüfter 26 eine größere Menge an Luft durch den regenerativen Luftvorwärmer 22 gefördert wird, als den Brennern des Dampferzeugers 7 als Verbrennungsmedium zugeführt wird. Die überschüssige Luft wird abgezweigt und als Teilstrom zur Wärmeabgabe durch den Kondensatvorwärmer 35 geführt. Die so abgekühlte Luft wird auf der Saugseite des Frischlüfters 26 wieder aufgegeben und erneut im Kreislauf durch den regenerativen Luftvorwärmer 22 geführt. Die über den Kondensatvorwärmer 35 rückgeführte Teilstrommenge wird in Abhängigkeit von der Last des Dampferzeugers 7 über das Regelorgan 33 in der Warmluftleitung 28 geregelt. Dabei wird bei entsprechender Menge der von dem Frischlüfter 26 geförderten Luft eine solche Teilstrommenge an vorgewärmter Luft dem Kondensatvorwärmer 35 zugeführt, die für die Wärmeübertragung in dem regenerativen Luftvorwärmer 22 zur Erreichung der geforderten Temperatur des den regenerativen Luftvorwärmer 22 verlassenden Rauchgases erforderlich ist.

## Patentansprüche

1. Kombinierte Gas-Dampf-Kraftanlage mit einer Gasturbine (4) und einem befeuerten Dampferzeuger (7), wobei dem Dampferzeuger (7) in Strömungsrichtung des Rauchgases ein von dem Rauchgas und von über einen Frischlüfter (26) geförderter Luft durchströmter, regenerativer Luftvorwärmer (22) nachgeschaltet ist, wobei eine Entstickungsanlage (21) vorgesehen ist, wobei der Dampferzeuger (7) mit Brennern versehen ist, die jeweils mit einer an den Gasaustritt der Gasturbine (4) angeschlossenen Abgasleitung (30) und mit einer an die heiße Seite des regenerativen Luftvorwärmers (22) angeschlossenen Warmluftleitung (28) verbunden sind und wobei die Abgasleitung (30) und die Warmluftleitung (28) vor dem Eintritt in den jeweiligen Brenner über eine Mischeinrichtung (31) miteinander verbunden sind, dadurch gekennzeichnet, daß die Entstickungseinrichtung (21) dem Luftvorwärmer (22) in Strömungsrichtung des Rauchgases vorgeschaltet ist, daß von der Warmluftleitung (28) eine Leitung (34) abgezweigt und zu der Saugseite des Frischlüfters (26) zurückgeführt ist, daß in der abgezweigten Leitung (34) ein Kondensatvorwärmer (35) angeordnet ist und daß in der Warmluftleitung (28) zwischen dem Abzweig der Leitung (34) und der Mischeinrichtung (31) ein Regelorgan (33) angeordnet ist.

2. Kraftanlage nach Anspruch 1, dadurch gekennzeichnet, daß der Kondensatvorwärmer (35) in den Wasser-Dampf-Kreislauf des Dampferzeugers (7) eingebunden ist.

3. Kraftanlage nach Anspruch 2, dadurch gekennzeichnet, daß der mit vorgewärmter Luft beaufschlagte Kondensatvorwärmer (35) parallel zu einem mit Anzapfdampf beheizten in den Wasser-Dampf-Kreislauf des Dampferzeugers (7) eingebundenen Niederdruckvorwärmer (16) geschaltet ist.

4. Kraftanlage nach Anspruch 2, dadurch gekennzeichnet, daß der mit vorgewärmter Luft beaufschlagte Kondensatvorwärmer (35) in einen von dem Dampferzeuger (7) unabhängigen Wärmekreislauf geschaltet ist.

5. Kraftanlage nach einem der Ansprüche 1 bis 4, dadurch gekennzeichnet, daß dem Luftvorwärmer (22) ein Filter (21) nachgeschaltet ist und daß von der abgezweigten Leitung (34) zwischen dem Kondensatvorwärmer (35) und dem Frischlüfter (26) eine absperrbare Zweigleitung (38) zu der Rauchgasseite hinter dem regenerativen Luftvorwärmer (22) geführt ist.

6. Kraftanlage nach einem der Ansprüche 1 bis 5, dadurch gekennzeichnet, daß in der Abgasleitung (30) der Gasturbine (4) in Strömungsrichtung des Abgases ein Zwischenenthitzer (39) angeordnet ist.

7. Kraftanlage nach Anspruch 6, dadurch gekennzeichnet, daß der in der Abgasleitung (30) liegende Zwischenenthitzer (39) mit dem Wasser-Dampf-Kreislauf des Dampferzeugers (7) verbunden ist.

8. Kombinierter Gas-Dampf-Prozeß mit einer Gasturbine 4 und einen befeuerten Dampferzeuger (7), bei dem das den Dampferzeuger (7) verlassende Rauchgas in einem regenerativen Luftvorwärmer (22) im Wärmetausch mit durch einen Frischlüfter (26) geförderter Luft abgekühlt wird, bei dem das Rauchgas entstickt wird und bei dem das Abgas der Gasturbine (4) und die vorgewärmte Luft miteinander gemischt und den Brennern des Dampferzeugers (7) zugeführt wird, dadurch gekennzeichnet, daß das Rauchgas vor dem Eintritt in den Luftvorwärmer (22) entstickt wird, daß ein geregelter Teilstrom der vorgewärmten Luft zu einem in den Wasser-Dampf-Kreislauf des Dampferzeugers (7) eingebundenen Kondensatvorwärmer (35) zur Vorwärmung von Kondensat geführt und anschließend zu der Saugseite des Frischlüfters (26) zurückgeführt wird.

9. Prozeß nach Anspruch 8, dadurch gekennzeichnet, daß der dem Kondensatvorwärmer (35) zugeführte Teilstrom in Abhängigkeit von dem Lastzustand des Dampferzeugers (7) in der Weise geregelt wird, daß bei entsprechender Menge der von dem Frischlüfter (26) geförderten Luft eine solche Teilstrommenge an vorgewärmter Luft dem Kondensatvorwärmer (35) zugeführt wird, die für die Wärmeübertragung in dem regenerativen Luftvorwärmer (22) zur Erreichung der geforderten Temperatur des den regenerativen Luftvorwärmer (22) verlassenden Rauchgases erforderlich ist.

10. Prozeß nach Anspruch 8 oder 9, dadurch gekennzeichnet, daß insbesondere im Teillastbetrieb eine Teilmenge der rückgeführten Luft nach dem Durchströmen des Kondensatvorwärmers (35) über die Rauchgasseite hinter dem regenerativen Luftvorwärmer (22) abgeführt wird.
